Europäisches Patentamt

European Patent Office

Office européen des brevets

(19)

(11) Veröffentlichungsnummer: **0 024 419**
**B1**

(12) **EUROPÄISCHE PATENTSCHRIFT**

(45) Veröffentlichungstag der Patentschrift:
**18.05.83**

(21) Anmeldenummer: **80900490.6**

(22) Anmeldetag: **22.02.80**

(86) Internationale Anmeldenummer:
**PCT/EP 80/00011**

(87) Internationale Veröffentlichungsnummer:
**WO 80/01838 (04.09.80 Gazette 80/20)**

(51) Int. Cl.³: **G 01 N 1/24**, G 01 N 1/28

(54) **Vorrichtung zur Gewinnung von Staubproben aus Mineralien für Analysezwecke.**

(30) Priorität: **26.02.79 DE 2907514**

(43) Veröffentlichungstag der Anmeldung:
**11.03.81 Patentblatt 81/10**

(45) Bekanntmachung des Hinweises auf die Patenterteilung:
**18.05.83 Patentblatt 83/20**

(84) Benannte Vertragsstaaten:
**AT CH DE FR GB LU NL SE**

(56) Entgegenhaltungen:
**CH-A-542 695**
**DE-A-2 310 663**
**FR-A-1 554 504**
**GB-A-735 969**
**GB-A-788 052**
**GB-A-1 113 555**

(73) Patentinhaber: **LUOSSAVAARA-KIIRUNAVAARA AB,**
**Sturegatan 11, S-100 41 Stockholm (SE)**

(72) Erfinder: **FREUND, Hans-Ulrich,**
**Albert-Schweitzer-Strasse 7, D-6382 Friedrichsdorf (DE)**
Erfinder: **HEIDE, Wolfgang Martin,**
**Elisabethenstrasse 38, D-6100 Darmstadt (DE)**
Erfinder: **SIEGLEN, Rolf Albert, Im Hohlweg 8a,**
**D-6231 Sulzbach (DE)**

(74) Vertreter: **Rupprecht, Klaus, Dipl.-Ing., Am Römerhof 35,**
**D-6000 Frankfurt (Main) 90 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Vorrichtung zur Gewinnung von Staubproben aus Mineralien für Analysezwecke

Die Erfindung betrifft eine Vorrichtung zur Gewinnung von Staubproben aus Mineralien für Analysezwecke. Sie dient insbesondere zur raschen Erzeugung von Staubproben für die Schnellanalyse von Mineralien bei der Prospektion, wenn Lagerstätten erkundet und bewertet werden, und beim Abbau von Mineralien zum Zwecke der Qualitätskontrolle, Überwachung sowie Steuerung des Abbauvorgangs.

Aus GB-A Nr. 735969 ist eine Vorrichtung bekannt, mit welcher Staub aus Mineralien erzeugt wird. Der Meissel dieser Vorrichtung ist mit einem Anregungsteil für mechanische Schwingungen gekoppelt. Ferner ist eine Saugeinrichtung zur Sammlung des erzeugten Staubes vorgesehen. Eine solche Vorrichtung ist jedoch zur Gewinnung von Staubproben aus Mineralien nicht geeignet; der Staub wird lediglich als Abfallprodukt erzeugt und ist für Analysezwecke nicht repräsentativ.

Gegenwärtig werden oberirdische Mineralproben durch Prospektion aufgrund geologischer, mineralogischer u.a. Indikatoren gesammelt. Mineralbrocken hierfür werden gegebenenfalls aus dem massiven Gestein bzw. von grösseren Brokken mit einfachem Werkzeug losgetrennt. Die Erzbrocken werden morphologisch analysiert und einer chemischen Elementanalyse unterzogen. Zur Prospektion unterirdischer Lagerstätten werden Bohrproben bzw. Bohrkerne gezogen. Ebenfalls wird das während des Bohrens anfallende Mahlgut, das mit Spülmitteln aus dem Bohrloch transportiert wird, Analysezwecken zugeführt. In beiden Fällen sind grössere Mengen von bis zu einigen Kilogramm Ausgangsmaterial erforderlich, das gegebenenfalls gemahlen, getrocknet und homogenisiert wird. Ein geringer repräsentativer Bruchteil hiervon wird der Analyse zugeführt.

Beim Abbau mineralischer Rohstoffe werden die Proben an verschiedenen Stellen, ausgehend vom Abbruchort, dem Mineraltransportstrom entnommen. Zur Qualitätsüberwachung ist eine verlässliche repräsentative Probennahme wichtig. Das bedeutet, dass als Ausgangsmenge eine grosse Masse an Substanz von einigen 100 kg pro Analyse gezogen werden muss, die etwa vom Förderband, aus einer Wagenladung oder Halde entnommen wird. Diese Ausgangsmenge wird gegebenenfalls in mehreren Stufen in jeweils abgetrennten Fraktionen weiterbehandelt, z.B. getrocknet, zerkleinert usw. Am Ende steht auch hier eine im Vergleich zur Ausgangsmenge geringe Menge von einigen Gramm an Substanz, die der Analyse zugeführt wird.

Die Elementanalyse wird z.B. auf nasschemischem Weg oder mit Hilfe der Röntgenfluoreszenz durchgeführt. Beim ersten Verfahren wird die Probensubstanz in starken Säuren aufgelöst und anschliessend quantitativen Testverfahren unterworfen, die den Elementanteilen des interessierenden Wertminerals angepasst sind. Diese Verfahren umfassen einfache robuste Methoden für den Feldbetrieb und komplexe Methoden mit Einsatz automatisierter Apparaturen für Laboranwendung. Bei der Röntgenfluoreszenz wird das Probenmaterial zu Tabletten gepresst und einem automatisierten Analysengerät zugeführt. Die Probe kann auf Elemente mit Ordnungszahlen oberhalb 10 mit einer bestimmten, für das Element spezifischen Nachweisgrenze analysiert werden.

Der vorliegenden Erfindung liegt die Aufgabe zugrunde, eine Vorrichtung zu entwickeln, mit der innerhalb sehr kurzer Zeit repräsentatives Probenmaterial gewonnen werden kann. Insbesondere soll die Probe kleine Teilchengrössen aufweisen und sich zur unmittelbaren Analyse eignen.

Es hat sich nun gezeigt, dass sich diese Aufgabe in technisch fortschrittlicher Weise lösen lässt, wenn die Vorrichtung aus einem Anregungsteil für mechanische Ultraschallschwingungen und einem damit gekoppelten Meissel besteht, und dass eine Saugeinrichtung zur Sammlung des erzeugten Staubes vorgesehen ist. Die vorteilhaften Ausführungsformen der erfindungsgemässen Vorrichtung sind in den Unteransprüchen 2 bis 8 erläutert.

Der Ultraschall-Anregungsteil liefert die Energie zur Anregung des Meissels zu hochfrequenten mechanischen Schwingungen. Hierfür sind piezoelektrische oder magnetostriktive Wandler verwendbar. Der Meissel ist mit dem Anregungsteil gekoppelt und schwingt an der Spitze mit maximaler Amplitude. Die Meisselspitze besitzt eine solche Form, dass die Stauberzeugung begünstigt wird und dass die grösstmögliche Menge des Staubs der Saugeinrichtung zugänglich ist. In Abhängigkeit von der Beschaffenheit des zu untersuchenden Minerals kann die Meisselspitze kalottenförmig, konisch oder abgeschrägt sein. Der Meissel kann gegebenenfalls auch Drehbewegungen durchführen.

Das Material, aus dem der Meissel angefertigt ist, muss eine gute Wechselfestigkeit und geringe innere Verluste zeigen. Hierfür sind verschiedene Metalle, insbesondere Legierungen des Titans, geeignet. Die Meisselspitze kann zusätzlich gegen Abrieb geschützt werden. Dies kann durch Aufbringen eines Sonderwerkstoffs, wie metall-keramische Materialien, durch Einlagerung von z.B. keramischen Schleifpartikeln oder durch Oberflächenbehandlung, wie z.B. Nitrieren oder Karburieren, erfolgen. Der Meissel kann auch vollkommen aus einem homogenen, abriebfesten, pulvermetallurgischen Sinterwerkstoff bestehen.

Die Saugeinrichtung besteht aus dem Saugkopf, der Saugleitung und dem Staubsammelteil. Die Ausaugdüse kann dicht an die Meisselspitze geführt werden, ohne diese zu berühren. Sie kann die Meisselspitze auch konzentrisch umhüllen. Die Meisselspitze kann ferner eine Bohrung enthalten, die die Ansaugdüse bildet. Der Staubsammelteil stellt in der Regel einen Filterkopf für Membranfilter dar. Zur Sammlung des erzeugten Staubes kann aber auch in der Saugleitung ein Impaktor verwendet werden. Eine Pumpen- und Kontrolleinheit dient zur Regelung der durchgesaugten Luftmenge.

Im folgenden wird die Erfindung anhand von Zeichnungen näher erläutert. Es zeigen in schematischer Vereinfachung:

Fig. 1a-c drei mögliche Ausführungsformen der erfindungsgemässen Vorrichtung,

Fig. 2a-g einige Formen für die Meisselspitze,

Fig. 3 den erfindungsgemässen Meissel mit getrennter Saugeinrichtung, und

Fig. 4 eine Schemaskizze der erfindungsgemässen Vorrichtung.

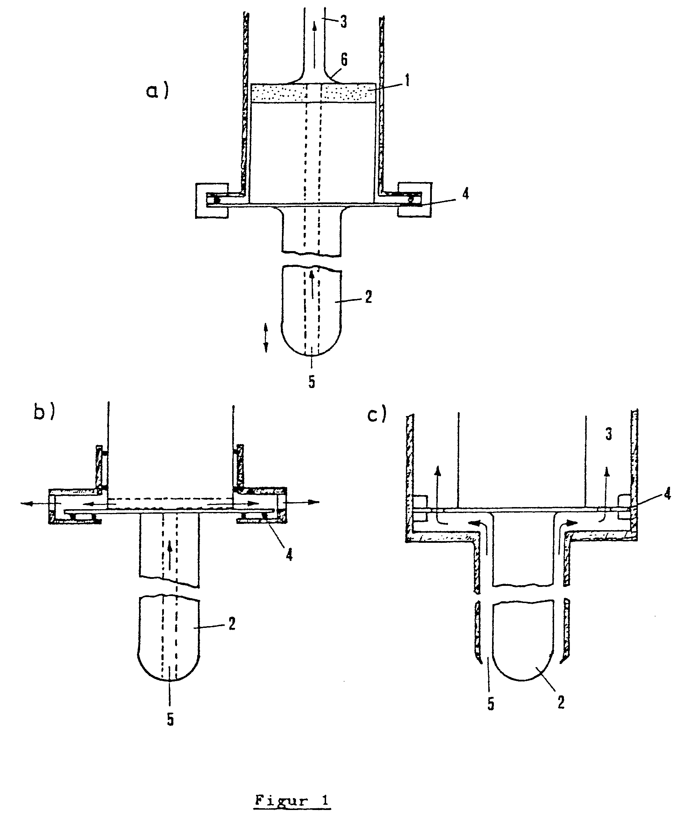

Wie aus Fig. 1 hervorgeht, besteht die erfindungsgemässe Vorrichtung aus einem Anregungsteil 1, einem Meissel 2 und einer Saugeinrichtung mit Saugleitung 3. Zur Erhöhung der Amplitude der Meisselschwingung ist der Querschnitt des Meissels im Vergleich zu dem Querschnitt des Anregungssystems untersetzt. Die Vorrichtung wird in der λ/4-Knotenebene durch eine Knotenhalterung 4 mechanisch fixiert.

Die Saugeinrichtung besteht aus der Ansaugdüse 5, der Saugleitung 3 und dem Staubsammelteil. Die letztere Einheit ist in den Zeichnungen nicht dargestellt. Ebenso nicht die Pumpen- und Kontrolleinheit zur Regelung der durchgesaugten Luftmenge. Die Saugdüse 5 bzw. ein Teil der Saugleitung kann durch eine axiale Bohrung durch den Meissel 2 gebildet werden, wie es in Fig. 1a und 1b schematisch dargestellt ist. Gemäss Ausführungsform in Fig. 1a führt die Bohrung, die einen Teil der Saugleitung 3 bildet, auch durch das Anregungssystem 1. In diesem Fall müsste der Teil 6 der Saugleitung, der die Verbindungsstelle mit dem Anregungssystem 1 bildet, aus einem elastischen Material angefertigt sein, um die Schwingungen des Anregungssystems nicht zu beeinträchtigen. In der in Fig. 1b gezeichneten Ausführungsform wird das gesaugte Gut nicht zentral durch das Anregungssystem sondern radial im Bereich des Schwingungsknotens zu einem gemeinsamen Ausgang geführt.

In der in Fig. 1c dargestellten Form umhüllt die Saugdüse 5 konzentrisch die Meisselspitze 2. Zur Ableitung des erzeugten Staubs sind auch hier verschiedene Möglichkeiten denkbar. Die Saugleitung kann sowohl in radialer als auch in axialer Richtung geführt werden. Der erzeugte Staub wird durch die Saugleitung zu einem Staubsammelteil geleitet. Der Staubsammelteil besteht entweder aus einem Filterkopf oder aus einem Impaktor für grössere Staubmengen. Diese Art der Sammlung von Probenmaterial ermöglicht auch eine kontinuierliche Entnahme.

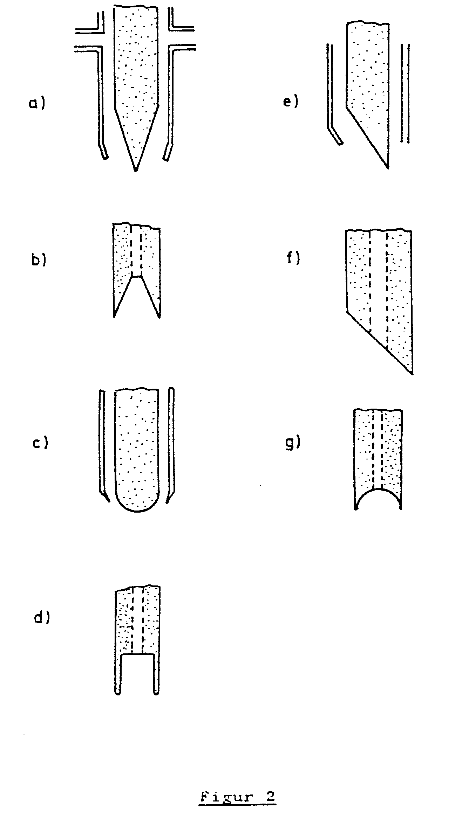

In den Fig. 2a bis 2g werden mehrere Formen für die Meisselspitze gezeigt. Andere Möglichkeiten sind ebenfalls denkbar. Bei den Ausführungsformen in Fig. 2a, 2c und 2e wird der Staub konzentrisch um die Meisselspitze abgesaugt, während in Fig. 2b, 2d, 2f und 2g das Ansaugen durch die Spitze des Meissels vorgenommen wird.

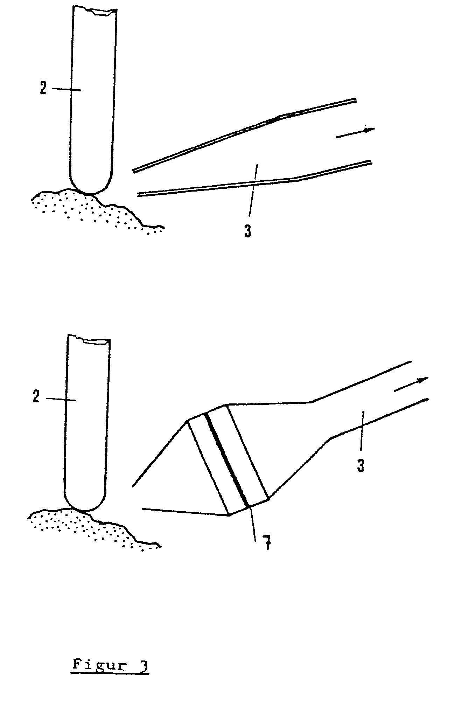

Der Staub kann jedoch auch unmittelbar neben der Meisselspitze abgesaugt werden, wie es in Fig. 3 dargestellt ist. In diesem Fall wird die Saugleitung unter einem Neigungswinkel dicht an die Meisselspitze 2 herangeführt, ohne diese zu berühren. Der Filterkopf 6 kann sich auch nahe an der Saugdüse befinden. Diese Version hat den Vorteil, dass praktisch keine Reinigung der Saugleitung von Staubniederschlägen erforderlich ist.

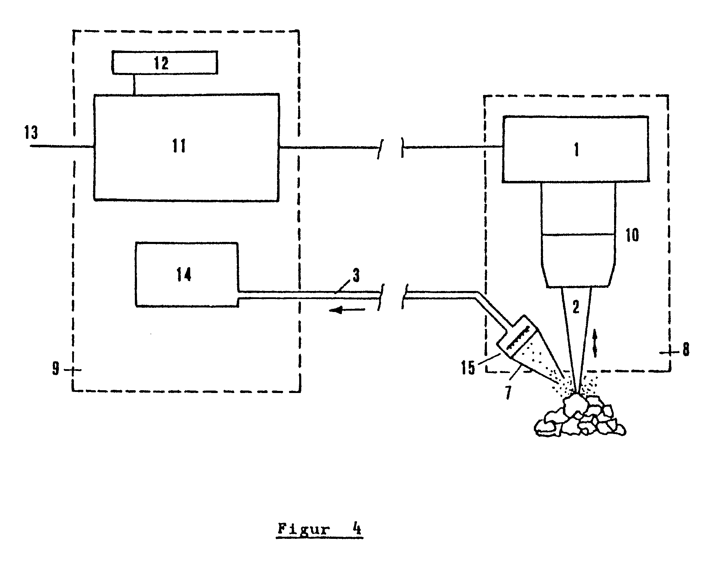

Aus der in Fig. 4 gezeigten Schemaskizze einer erfindungsgemässen Ausführungsform wird deutlich, dass die Vorrichtung im wesentlichen zwei Einheiten umfasst, und zwar das Handgerät 8 und die tragbare Einheit 9. Das Handgerät 8 besteht aus dem Anregungsteil 1, dem Ultraschallkoppler 10 und dem Meissel 2. Die tragbare Einheit 9 enthält eine Steuereinheit 11 mit Batterie- 12 bzw. Netzanschluss 13, eine Saugpumpe 14 und die Saugleitung 3. Durch den Filterkopf 7 wird die Filterprobe 15 gesammelt.

Unter Verwendung der erfindungsgemässen Vorrichtung wird Staub von sehr feiner Teilchengrösse aus der Oberfläche von Mineralbrocken oder auch festem Gestein erzeugt. Die Teilchengrösse liegt dabei mit grosser Effizienz im Bereich einiger bis ca. 100 µm Durchmesser. Die Staubzusammensetzung ist identisch mit derjenigen des Minerals an der Stelle, an der der Ultraschallmeissel die Oberfläche berührt. In den Fällen, in denen mehrere kleinere Bereiche oder ein grösserer Bereich eines Mineralgangs gewünscht wird, kann der Ultraschallmeissel nacheinander an den gewünschten Stellen angesetzt werden. Speziell zur grossflächigen bzw. grossräumigen Probennahme werden an einer gemeinsamen Halterung parallele Einzelvorrichtungen befestigt. Die um die Meisselspitze erzeugte, räumlich eng begrenzte Staubwolke wird in den Staubsammelteil abgesaugt. Auf diese Weise ist Stauberzeugung und Sammlung an trockenem und feuchtem Mineral möglich. Die Staubproben können auch durch Aufsaugen auf Membranfilter in eine Form gebracht werden, in der sie unmittelbar einer energiedispersiven Röntgenfluoreszenz-Analyse (EDX) zugeführt werden können.

Mit der erfindungsgemässen Vorrichtung ist aufgrund der effektiven Stauberzeugung und der geringen erforderlichen Probensubstanzmenge eine Probenherstellung innerhalb sehr kurzer Zeit, z.B. 10 s möglich. Auf diese Weise kann eine grosse Anzahl von Proben pro Zeiteinheit gewonnen werden. Ferner wird das Probenmaterial unmittelbar an der Spitze des Meissels auf sehr kleine Teilchengrössen von ca. 10 bis 100 µm zerkleinert.

Wenn erforderlich oder zweckmässig, wird eine Fraktion des Probenmaterials gewonnen, um beispielsweise die nachfolgende Analyse zu erleichtern. Dies lässt sich mit Hilfe eines Filters oder eines Impaktor-Einsatzes in der Saugleitung erreichen. Die gesammelten Proben geben die Elementzusammensetzung des Minerals an der Stelle wieder, an der der Meissel angesetzt wurde. Eine Verunreinigung durch das Umgebungsmaterial ist ausgeschlossen.

Die erfindungsgemässe Vorrichtung zur Herstellung und Sammlung von Staub aus Mineralien kann als batteriegespeiste tragbare Einheit konzipiert werden. Auf diese Weise ist eine Prospektion entlegener Vorkommen auf bequeme Art möglich. Proben in Form von homogen belegten Staubfilterproben können somit unmittelbar, z.B.

in einem mobilen Feldgerät der EDX, analysiert werden.

## Patentansprüche

1. Vorrichtung zur Gewinnung von Staubproben aus Mineralien für Analysezwecke, dadurch gekennzeichnet, dass sie aus einem Anregungsteil (1) für mechanische Ultraschallschwingungen und einem damit gekoppelten Meissel (2) besteht, und dass eine Saugeinrichtung zur Sammlung des erzeugten Staubes vorgesehen ist.

2. Vorrichtung nach Anspruch 1, dadurch gekennzeichnet, dass der Meissel (2) rotierbar gelagert ist.

3. Vorrichtung nach dem Ansprüchen 1 und 2, dadurch gekennzeichnet, dass die Meisselspitze (2) kalottenförmig, konisch oder abgeschrägt ist.

4. Vorrichtung nach den Ansprüchen 1 bis 3, dadurch gekennzeichnet, dass die Saugeinrichtung eine Ausaugdüse (5) aufweist, die dicht an die Meisselspitze geführt ist, ohne diese zu berühren.

5. Vorrichtung nach einem der Ansprüche 1 bis 4, dadurch gekennzeichnet, dass die Ansaugdüse (5) die Meisselspitze konzentrisch umhüllt.

6. Vorrichtung nach einem der Ansprüche 1 bis 5, dadurch gekennzeichnet, dass die Meisselspitze eine Bohrung enthält, die die Ansaugdüse (5) der Saugeinrichtung darstellt.

7. Vorrichtung nach einem der Ansprüche 1 bis 6, dadurch gekennzeichnet, dass zur Sammlung des erzeugten Staubs in der Saugeinrichtung im Luftstrom ein Filter vorgesehen ist.

8. Vorrichtung nach einem der Ansprüche 1 bis 6, dadurch gekennzeichnet, dass zur Sammlung des erzeugten Staubs in der Saugeinrichtung ein Impaktor verwendet ist.

9. Vorrichtung nach einem der Ansprüche 1 bis 8, dadurch gekennzeichnet, dass mehrere Einzelvorrichtungen gemäss den Ansprüchen 1 bis 8 auf einer gemeinsamen Halterung befestigt sind, und dass zur Sammlung des erzeugten Staubs eine einzige Saugeinrichtung vorgesehen ist.

## Claims

1. Device for obtaining dust samples from minerals for the analysis comprising an excitation part (1) for mechanical ultrasonic vibrations and a chisel (2) connected with it and a suction device for collection of the dust generated.

2. Device as claimed in claim 1 wherein the chisel (2) is mounted rotatably.

3. Device as claimed in claim 1 or 2 wherein the chisel tip (2) is calotte-shaped, conical or bevelled.

4. Device as claimed in any of the claims 1 to 3 wherein the suction device has a suction nozzle (5) which is positioned close to the chisel tip without touching it.

5. Device as claimed in any of the claims 1 to 4 wherein the suction nozzle (5) surrounds the chisel tip concentrically.

6. Device as claimed in any of the claims 1 to 5 wherein the chisel tip has a bore hole which serves as the suction nozzle (5) of the suction device.

7. Device as claimed in any of the claims 1 to 6 wherein a filter is provided in the air flow of the suction device to collect the dust generated.

8. Device as claimed in any of the claim 1 to 7 wherein an impactor is used in the suction device to collect the dust generated.

9. Device as claimed in any of the claims 1 to 8 wherein several individual devices according to claims 1 to 8 are attached to a common mounting and a single suction device is provided to collect the dust generated.

## Revendications

1. Dispositif pour l'obtention d'échantillons de poudre de produits minéraux à des fins d'analyse, caractérisé en ce qu'il est constitué par un élément d'activation (1) pour vibrations mécaniques aux ultrasons et par un couteau (2) couplé à cet élément, et qu'il est prévu un dispositif d'aspiration pour recueillir la poudre obtenue.

2. Dispositif selon la revendication 1, caractérisé en ce que le couteau (2) est monté en rotation.

3. Dispositif selon l'une des revendications 1 ou 2, caractérisé en ce que la pointe de l'outil tranchant (2) est en forme de calotte, de cône, ou biseautée.

4. Dispositif selon l'une quelconque des revendications 1 à 3, caractérisé en ce que le dispositif d'aspiration comporte une buse d'aspiration (5), qui est montée de façon étanche sur la pointe de l'outil tranchant, sans être en contact avec elle.

5. Dispositif selon l'une quelconque des revendications 1 à 4, caractérisé en ce que la buse d'aspiration (5) entoure de façon concentrique la pointe de l'outil tranchant.

6. Dispositif selon l'une quelconque des revendications 1 à 5, caractérisé en ce que la pointe de l'outil tranchant comporte un orifice qui représente la buse d'aspiration (5) du dispositif d'aspiration.

7. Dispositif selon l'une quelconque des revendications 1 à 6, caractérisé en ce que, pour recueillir la poudre obtenue dans le dispositif d'aspiration, il est prévu un filtre dans l'écoulement de l'air.

8. Dispositif selon l'une quelconque des revendications 1 à 6, caractérisé en ce que, pour recueillir la poudre obtenue dans le dispositif d'aspiration, il est prévu un appareil à impacts.

9. Dispositif selon l'une quelconque des revendications 1 à 8, caractérisé en ce que plusieurs dispositifs individuels sont montés sur un support commun et que, pour recueillir la poudre obtenue, il est prévu un dispositif d'aspiration unique.

Figur 1

a)

e)

b)

f)

c)

g)

d)

Figur 2

Figur 3

Figur 4